# EUROPÄISCHE PATENTSCHRIFT

(11) **EP 2 597 961 B1**
(45) Veröffentlichungstag und Bekanntmachung des Hinweises auf die Patenterteilung: **30.04.2025**
(21) Anmeldenummer: 11736355.6
(22) Anmeldetag: 25.07.2011
(51) Int. Cl.: A23F 5/08, A47J 42/32, B02C 4/06, B02C 4/44

(54) **MAHLEN VON KAFFEEBOHNEN**
GRINDING OF COFFEE BEANS
MOUTURE DE GRAINS DE CAFÉ

(30) Priorität: 28.07.2010 EP 10171084
(43) Veröffentlichungstag der Anmeldung: 05.06.2013
(73) Patentinhaber: Bühler AG, 9240 Uzwil (CH)
(72) Erfinder: KELLER, Marco, CH-8514 Bissegg (CH); BRAUN, Peter, CH-8280 Kreuzlingen (CH)
(74) Vertreter: Wilming, Martin
(86) Internationale Anmeldenummer: PCT/EP2011/062717
(87) Internationale Veröffentlichungsnummer: WO 2012/013620

(56) Entgegenhaltungen:
- WO-A2-2009/043590
- WO-A2-2009/043590
- GB-A- 176 305
- GB-A- 176 305
- GB-A- 2 074 761
- JP-A- 2006 204 737
- JP-A- 2006 204 737
- US-A- 4 484 064
- US-A- 4 484 064
- US-A1- 2002 110 626

## Beschreibung

Die Erfindung betrifft eine Vorrichtung zum Bearbeiten von gerösteten Kaffeebohnen mit einer Einheit zum Mahlen der Bohnen und ein Verfahren zum Bearbeiten von Kaffeebohnen, wobei die Kaffeebohnen gemahlen werden und die Temperatur des Mahlguts, zumindest bei Beginn des Mahlvorgangs, zwischen 30°C und 150°C, insbesondere zwischen 35°C und 100 °C, bevorzugt zwischen 40°C und 90 °C, besonders bevorzugt zwischen 40°C und 60 °C beträgt.

Beim herkömmlichen Verarbeitungsprozess zur Herstellung von gemahlenem und abgepackten Kaffee wird grüner Kaffee zunächst bei Temperaturen von über 150°C geröstet und danach mittels Raumluft gekühlt, was typischerweise in einer Bohnentemperatur von ca. 5°C über Raumtemperatur, also einer Bohnentemperatur zwischen 20 - 40 °C, resultiert.

Anschliessend wird der Kaffee vermahlen, wobei die Mahlwerkzeuge, zum Beispiel die Walzen, gekühlt werden und eine Temperaturerhöhung des Mahlkaffees weitgehend vermieden wird. Endtemperaturen des Mahlgutes liegen daher im Bereich 20 - 40 °C.

Beim letzten Teilabschnitt der Röstung kommt es zu pyrolytischen Reaktionen, bei welchen Wasser und CO₂ freigesetzt werden. Da das Zellgefüge der Kaffeebohne eher dickwandig ist, kann sich das CO₂ während des Prozesses nicht verflüchtigen, wodurch sich zum Röstende ein CO₂ bedingter Überdruck in den Zellen ausbildet, welcher bis zu mehreren Bar Überdruck betragen kann.

Beim anschliessenden Mahlprozess werden je nach Mahlgrad die Zellen aufgeschlossen, wobei meistens ein Anteil an unbeschädigten Zellen verbleibt. Wird der Mahlkaffee nun direkt nach der Mahlung abgepackt, geht die Entgasung weiter, was somit zur Bombierung, wenn nicht sogar zum Zerbersten der Verpackung führen kann. Aus diesem Grunde wird der Kaffee vor dem Abpacken zwischengelagert, um eine ausreichende Entgasung zu erreichen. Der Kaffee wird dazu beim herkömmlichen Verarbeitungsprozess in Silos bis zur kompletten CO₂-Freisetzung gelagert und dann abgepackt.

Während des Verarbeitungsprozesses muss also Platz und Zeit eingeräumt werden.

Ausserdem entweichen bei der offenen Zwischenlagerung auch Geschmacksstoffe und Aromen und es kann zu einer Oxidation des Kaffees kommen, was die Qualität und die Haltbarkeit des Kaffees unter Umständen beeinträchtigt.

Es besteht daher ein Bedarf, die Zwischenlagerung zu verkürzen. Dies kann z.B. erreicht werden, indem, wie z.B. in EP1363401 offenbart, die Verpackung des gemahlenen Kaffees mit einem Einwegventil ausgestattet wird, welches eine CO₂ Entgasung erlaubt, das Eindringen von Sauerstoff aber verhindert. Diese Ventile sind jedoch im Wesentlichen nur für grössere Gebinde geeignet. Alternativ ist zum Beispiel aus Bezman et al. "Method for Continuous Monitoring Rates of CO2 Release from R&G Coffee" (22nd International Conference on Coffee Science, Campinas Colloquium, 2008) bekannt, dass sich die Entgasung bei einer höheren Lagertemperatur beschleunigt. Diese Vorgehensweise erfordert allerdings einen zusätzlichen Aufwand für die Apparatur und für den Energieaufwand bei der Zwischenlagerung.

Derartige Vorrichtungen sind ebenso aus GB176305 und US2002110626 bekannt.

Es besteht daher die Aufgabe, die Nachteile des Bekannten zu vermeiden und eine Vorrichtung sowie ein Verfahren zur Bearbeitung von Kaffee bereitzustellen, durch welche eine Entgasung von gemahlenem Kaffee in der Verpackung weitestgehend verhindert werden kann und welche den Verarbeitungsprozess nicht unnötig verlängern und/oder verteuern.

Die Aufgabe wird gelöst durch eine Vorrichtung zum Bearbeiten von gerösteten Kaffeebohnen, wobei die Vorrichtung eine Thermoeinheit umfasst, die sicherstellt, dass die Temperatur der gerösteten Kaffeebohnen während des Mahlvorgangs, zumindest bei Beginn des Mahlvorgangs, zwischen 30°C und 150°C, insbesondere zwischen 35°C und 100°C, bevorzugt zwischen 40°C und 90 °C, besonders bevorzugt zwischen 40°C und 60 °C, beträgt, wobei das Mahlen insbesondere in einem Walzwerk mit einer, zwei oder mehr Passagen erfolgt.

Eine Passage besteht in der Regel aus einem Walzenpaar. Aufeinander folgende Passagen können durch Hinzufügen einzelner Walzen erzeugt werden. Bevorzugt besteht jede Passage aus einem separaten Walzenpaar.

Mit einem Walzwerk können kleinere Chargen von Mahlgut in einem batch-weisen Betrieb verarbeitet werden, bevorzugt werden aber grössere Mengen von Mahlgut quasikontinuierlich verarbeitet, wobei das Mahlgut über eine Zufuhreinrichtung dem Wahlwerk zugeführt und über einer Abführeinrichtung vom Mahlwerk weggeführt wird. Bei einer kontinuierlichen oder quasikontinuierlichen Verarbeitung wird das gesamte Mahlgut während des Mahlvorgangs im Wesentlichen nur einmal über das gleiche Walzenpaar geführt, es kann daher ständig Mahlgut nachgeführt werden.

Die erfindungsgemässe Vorrichtung umfasst ein modulares Walzwerk, das wahlweise mit einer oder mehreren Walzenpassagen ausgestattet werden kann.

Überraschenderweise hat sich herausgestellt, dass es vorteilhaft ist, die gerösteten Kaffeebohnen in Vorbereitung auf den nachfolgenden Mahlprozess, bzw. beim Mahlprozess, nicht auf zu geringe Temperaturen abzukühlen, wie dies üblicherweise getan wird, sondern noch warm in die Einheit zum Mahlen zu überführen und/oder darin zu verarbeiten. Um diesen Vorgang kontrolliert ablaufen zu lassen, enthält die Vorrichtung erfindungsgemäss eine Thermoeinheit. Die Thermoeinheit stellt sicher, dass der Kaffee bei den gewünschten Temperaturen in die Mahleinheit, insbesondere das Walzwerk, überführt wird und/oder bei den gewünschten Temperaturen vermahlen wird und verhindert, dass der Kaffee zu kalt oder zu warm verarbeitet wird. Dazu kann einerseits der Abkühlvorgang nach dem Rösten kontrolliert abgebrochen werden oder eine aktive Erwärmung erfolgen.

Die Warmvermahlung fördert zum einen die Entgasung während des Mahlvorgangs, zum anderen erübrigt sich eine nachträglich Erwärmung des gemahlenen Kaffees auf ein erhöhtes Temperaturniveau bei der Lagerung. Die Entgasung wird so beschleunigt, die Standzeit wird verkürzt und ein zusätzlicher Energieeintrag nach dem Mahlen ist in der Regel nicht mehr notwendig.

Um einer unerwünschten Aromaabgabe entgegenzuwirken, kann die Thermoeinheit mit einem System zum Aromaschutz oder zur Aromarückgewinnung gekoppelt werden, beispielsweise mit einem Adsorptionssystem.

Gemäß der Erfindung beeinflusst die Thermoeinheit die Temperatur des gerösteten Kaffees vor dem Mahlen. Dazu umfasst die Thermoeinheit eine Temperiereinrichtung und eine Mahlzufuhreinrichtung, insbesondere eine Mahlzufuhreinrichtung in ein Walzwerk, wobei die Temperiereinrichtung und Mahlzufuhreinrichtung so ausgelegt sind, dass die gerösteten Kaffeebohnen für den Beginn des Mahlvorgangs auf Temperaturen des Mahlguts von 30°C und 150°C temperierbar und bei diesen Temperaturen mahlbar sind.

Bevorzugt ist die Temperiereinrichtung eine Abkühlvorrichtung, in welcher die gerösteten Kaffeebohnen unmittelbar nach dem Rösten auf eine Temperatur zwischen 30°C und 150°C, insbesondere zwischen 35°C und 100°C, bevorzugt zwischen 40°C und 90 °C, besonders bevorzugt zwischen 40°C und 60 °C abgekühlt werden. Mittels der Mahlzufuhreinrichtung werden die Kaffeebohnen mit dieser Temperatur in die Einheit zum Mahlen überführt.

Alternativ kann die Temperiereinrichtung eine Vorrichtung zum Erwärmen von geröstetem, bereits abgekühltem Kaffee auf eine Temperatur zwischen 30°C und 150°C, insbesondere zwischen 35°C und 100°C, bevorzugt zwischen 40°C und 90°C, besonders bevorzugt zwischen 40°C und 60°C, sein.

In der erfindungsgemässen Vorrichtung beeinflusst die Thermoeinheit die Temperatur des gerösteten Kaffees während des Mahlens. Dazu umfasst die Thermoeinheit eine Temperiereinrichtung für die Einheit zum Mahlen, insbesondere für eine Walzwerk, die so ausgelegt ist, dass die Temperatur des Mahlguts zwischen 30°C und 150°C, insbesondere zwischen 35°C und 100°C, bevorzugt zwischen 40°C und 90 °C, besonders bevorzugt zwischen 40°C und 60°C, haltbar ist.

Es kann ausreichen, wenn das Mahlgut die gewünschte Temperatur zu Beginn des Mahlvorgangs hat, vorzugsweise wird jedoch Einfluss auf die Temperatur des Mahlguts während des gesamten Mahlvorgangs genommen.

Die Temperiereinrichtung für die Einheit zum Mahlen kann die gesamte Einheit zum Mahlen auf die Zieltemperatur oder den Zieltemperaturbereich bringen, oder nur die Mahlwerkzeuge. Insbesondere werden eine oder mehrere Passagen des Walzwerks geeignet temperiert.

Bei der Temperiereinrichtung für die Einheit zum Mahlen handelt es sich um eine Temperiereinrichtung für Mahlwerkzeuge, zum Beispiel die Mahlwalzen. Die Temperiereinrichtung hält die Mahlwerkzeuge während des Mahlvorgangs in mindestens einer Mahlstufe auf einer Temperatur oder einem Temperaturbereich zwischen 30°C und 150°C, insbesondere zwischen 35°C und 120°C, weiter insbesondere zwischen 40°C und 110°C, bevorzugt zwischen 40°C und 90°C, besonders bevorzugt zwischen 40°C und 60°C oder zwischen 60°C und 80°C.

Vorteilhafterweise können die jeweiligen Temperaturen separater Walzenpassagen oder einzelner Walzen individuell, also unabhängig voneinander, geregelt werden. Es ist somit ein Temperaturverlauf entlang des Mahlweges herstellbar

Mahlwerkzeuge, zum Beispiel Mahlwalzen, sind häufig mit Kanälen durchsetzt, durch welche Kühlwasser geleitet werden kann. Diese Kanäle können dazu genutzt werden, um eine Temperierflüssigkeit in die Mahlwerkzeuge einzubringen, wobei die Temperatur der Temperierflüssigkeit, beispielsweise Wasser oder Öl, derart steuer- und/oder regelbar ist, dass die Werkzeuge auf die gewünschte Zieltemperatur, bzw. den gewünschten Zieltemperaturbereich gebracht werden.

Die Temperiereinheit umfasst für die Regelung der Temperatur der Temperierflüssigkeit bevorzugt einen Temperatursensor, der in der Walze angeordnet ist. Die Temperatur der Temperierflüssigkeit in den Walzen ist ein gutes Mass für die Walzentemperatur.

Die Temperierung der Mahlwerkzeuge kann auch thermoelektrisch, beispielsweise über ein Peltierelement, erfolgen

Vorteilhafterweise ist die Temperatur des Mahlguts über die Thermoeinheit einstellbar. Dazu umfasst die Abkühl- und/oder die Temperiereinrichtung bevorzugt ein Eingabemittel zum Eingeben der Zieltemperatur oder des Zieltemperaturbereichs des Mahlguts, im vorliegenden Fall der gerösteten Kaffeebohnen. Das Eingabemittel kann beispielsweise ein Schalter, ein Schieber, ein Drehknopf und/oder eine Tastatur sein. Das Eingabemittel kann mit einem Anzeigemittel, beispielsweise einem Display, versehen sein, welches die auswählbaren Temperaturen, die ausgewählte Temperatur und/oder den ausgewählten Temperaturbereich anzeigt. Die Thermoeinheit kann auch mit einem Prozessorsystem verbunden sein, über welches die Temperatur oder der Temperaturbereich direkt oder in Abhängigkeit anderen Parameter an die Thermoeinheit eingegeben wird.

Um sicherzustellen, dass das Mahlgut die gewünschte Zieltemperatur, bzw. ein Temperatur im gewünschten Zieltemperaturbereich, hat, umfasst die Vorrichtung vorzugsweise eine Messeinrichtung zum Messen der Temperatur des gerösteten Kaffees vor, während und/oder nach dem Mahlen.

Die Temperaturmessung des Mahlguts erfolgt bevorzugt durch eine Temperaturmessung der umgebenden Luft oder durch eine Schüttgutmessung, bei welcher der Temperatursensor in das Schüttgut gehalten oder vom Schüttgut umströmt wird. Für die Temperaturmessung kann der Sensor in direkten Kontakt mit dem Schüttgut oder der umgebenden Luft gebracht werden oder die Temperaturmessung erfolgt kontaktlos, zum Beispiel optisch.

Bevorzugt umfasst die erfindungsgemässe Vorrichtung eine Regeleinrichtung zum Temperieren der Einheit zum Mahlen der Bohnen, insbesondere der Mahlwerkzeuge, in Abhängigkeit von der Temperatur des Mahlguts. Die Temperierung der Mahleinheit erfolgt dann automatisch in Abhängigkeit von der Temperatur des Mahlguts und in Abhängigkeit von der ausgewählten Zieltemperatur, bzw. dem ausgewählten Zieltemperaturbereich. Ist das aus der Mahleinheit ausgehende Mahlgut zu kalt wird die Temperatur hochgestellt, ist das ausgehende Mahlgut zu warm, wird die Temperatur heruntergestellt.

Vorteilhafterweise weist die erfindungsgemässe Vorrichtung ein Eingabe- und Vergleichmittel auf, mit welchen die Temperatur des Mahlguts in Abhängigkeit von der gewünschten Teilchengrössenverteilung des gemahlenen Kaffees bestimmt wird.

Es hat sich gezeigt, dass feiner gemahlener Kaffee weit weniger CO₂ als grob gemahlener Kaffee speichert, der Entgasungsprozess daher in Regel weniger stark zu forcieren ist.

Der Energieaufwand kann daher optimiert werden, wenn eine die Entgasung begünstigenden Temperierung des Mahlguts nur in dem Masse stattfindet, wie sie notwendig ist. Je nach der Teilchengrössenverteilung des gemahlenen Kaffees kann die Temperatur des Mahlguts also gezielt gewählt werden; in der Regel eher höhere Temperaturen für gröberen Kaffee, und eher niedrigere Temperaturen für fein zu mahlenden Kaffee.

Die Regelung kann aufgrund einer in einem Prozesssystem hinterlegten Tabelle erfolgen, welche den Zusammenhang zwischen Partikelgrösse und Temperatur für die Entgasung herstellt. Die Daten der Tabelle können empirisch erhoben werden.

Die Regelung kann auch auf der Basis von online oder inline gemessenen Daten erfolgen, zum Beispiel aufgrund der Partikelgrössen nach der Vermahlung, des CO₂-Gehalts vor und/oder während und/oder nach der Vermahlung oder aufgrund anderer Parameter, die direkt oder indirekt prozessrelevant sind.

Die Regelung kann auf Expertenwissen oder anderen artifiziellen intelligenten Systemen der Steuerungs- und/oder Regeltechnik basieren.

Die Aufgabe wird ausserdem gelöst durch ein Verfahren zum Verarbeiten von Kaffeebohnen, bei dem sichergestellt wird, dass die Temperatur des Mahlguts, zumindest bei Beginn des Mahlvorgangs, insbesondere in einem Walzwerk mit einer oder mehreren Passagen, zwischen 30°C und 150°C, insbesondere zwischen 35°C und 100°C, bevorzugt zwischen 40°C und 90°C, besonders bevorzugt zwischen 40°C und 60°C beträgt wobei das Mahlen insbesondere in einem Walzwerk mit einer, zwei oder mehr Passagen erfolgt.

Ein erfindungsgemässes Verfahren zum Verarbeiten von Kaffeebohnen umfasst dazu beispielsweise die folgenden Verfahrensschritte: (i) Rösten der Kaffeebohnen; (ii) Abkühlen der Kaffeebohnen auf Temperaturen von grösser als 66°C; (iii) Mahlen der Kaffeebohnen bei Temperaturen zwischen 66°C und 150°C, insbesondere in einem Walzwerk mit einer oder mehreren Passagen.

Alternativ oder zusätzlich umfasst das erfindungsgemässe Verfahren die folgenden Verfahrensschritte:
(i) Rösten der Kaffeebohnen; (ii) Abkühlen der Kaffeebohnen;
(iii) Temperaturmessung der Kaffeebohnen während der Abkühlung;
(iv) falls die Temperatur grösser als eine festgesetzte Zieltemperatur ist, weiter mit (ii), sonst Überführen der Kaffeebohnen in eine Mahleinheit; (v) Mahlen der Kaffeebohnen, insbesondere in einem Walzwerk mit einer oder mehreren Passagen; wobei die Zieltemperatur einen Wert zwischen 30°C und 150°C, insbesondere zwischen 35°C und 100°C, bevorzugt zwischen 40°C und 90°C, besonders bevorzugt zwischen 40°C und 60°C besitzt.

Die Temperaturmessung wird dabei kontinuierlich oder zumindest in regelmässigen Zeitabständen durchgeführt. Die typischen Zeitabstände zwischen zwei aufeinander folgenden Temperaturmessungen betragen dabei bevorzugt 5-300 Sekunden. Die Messung kann auch, z.B. in einem Regelkreis, quasikontinuierlich erfolgen.

Die Aufgabe wird weiterhin gelöst durch ein Verfahren zum Verarbeiten von Kaffeebohnen in einer Einheit zum Mahlen der Bohnen, insbesondere wie oben beschrieben, dass das Mahlgut vor oder während des Mahlens derart temperiert wird, dass die Temperatur des Mahlguts zumindest bei Beginn des Mahlvorgangs zwischen 30°C und 150°C, insbesondere zwischen 35°C und 100°C, bevorzugt zwischen 40°C und 90°C, besonders bevorzugt zwischen 40°C und 60°C liegt.

Bevorzugt wird dazu die Einheit zum Mahlen, insbesondere ein Walzwerk, weiter insbesondere eine oder mehrere Walzen, derart temperiert wird, dass die Temperatur des Mahlguts zwischen 30°C und 150°C, insbesondere zwischen 35°C und 100°C, weiter insbesondere zwischen 40°C und 60°C liegt, insbesondere die Mahlwerkzeuge mindestens einer Mahlstufe auf Temperaturen zwischen 30°C und 150°C, insbesondere zwischen 35°C und 120°C, weiter insbesondere zwischen 40°C und 110°C, bevorzugt zwischen 40°C und 90°C, besonders bevorzugt zwischen 60°C und 80°C temperiert werden.

Da ein sehr enger Kontakt zwischen den Mahlwerkzeugen und dem Mahlgut besteht, stellt sich ein Temperaturausgleich zwischen Mahlgut und Mahlwerkzeugen ein und das Mahlgut nimmt die durch die Mahlwerkzeuge abgegebene Wärme auf.

Beispielsweise wird gerösteter Kaffee durch eine Walze mit einer Temperatur von 60°C auf etwa 45°C erwärmt.

Alternativ kann ein Zieltemperaturbereich ausgewählt werden, der zwischen 30°C und 150°C, insbesondere zwischen 35°C und 100°C, weiter insbesondere zwischen 40°C und 60°C liegt, zum Beispiel ein Temperaturbereich mit einer Temperaturspanne von ±2-10°C.

Bevorzugt weist das erfindungsgemässe Verfahren einen Verfahrensschritt auf, bei dem die Temperatur des gerösteten Kaffees vor, während und/oder nach dem Mahlen gemessen wird. Die gemessene Temperatur kann zur Kontrolle verwendet werden, oder dazu, die beispielsweise in einer Temperiereinheit gewählte Temperatur nachzustellen.

Bevorzugt wird die Temperatur der Einheit zum Mahlen, insbesondere der Mahlwerkzeuge, in Abhängigkeit von der Temperatur des Mahlguts gesteuert und/oder geregelt.

Die Aufgabe wird ausserdem gelöst durch ein Verfahren, insbesondere wie oben beschrieben, bei dem die Temperatur des Mahlguts und/oder der Einheit zum Mahlen, insbesondere der Mahlwerkzeuge, in Abhängigkeit von der gewünschten Partikelgrössenverteilung des gemahlenen Kaffees eingestellt wird, insbesondere derart, dass der CO₂ Gehalt des gemahlenen Kaffees unmittelbar nach dem Mahlen, bzw. nach einer Lagerzeit von maximal 20 Stunden, unterhalb von 0.5 ml/g liegt.

Für gemahlenen Kaffee mit einem Maximum der Partikelgrössenverteilung bei ca. 500 µm kann das Mahlgut beispielsweise bei eine Temperatur von etwa 50°C gemahlen werden, damit nach einer Entgasungszeit von 7 Stunden nach dem Mahlen nur noch ein Gasgehalt von 0.5 ml/g verbleibt.

Soll der Kaffee gröber gemahlen werden, liegen also grössere Partikel vor, so hat es sich als vorteilhaft erwiesen, die Mahlung bei einer höheren Temperatur vorzunehmen, bei feiner gemahlenem Kaffee und kleineren Partikeln kann die Mahlung bei kühleren Temperaturen erfolgen.

Die folgende Tabelle zeigt den Zusammenhang zwischen Teilchengrösse, hier als Median der Teilchengrössen angegeben, und bevorzugter Temperatur des Mahlguts.

| x50 [µm] | Temperatur [°C] |
|---|---|
| 504 | 46 |
| 328 | 28 |
| 134 | 15 |

Die Erfindung ist im Folgenden anhand von Zeichnungen näher erläutert.

Es zeigt
- Figur 1: ein erstes Beispiel für eine erfindungsgemässe Vorrichtung mit einer Temperiereinrichtung für die Mahlwerkzeuge in schematischer Darstellung;
- Figur 2: ein zweites Beispiel für eine erfindungsgemässe Vorrichtung mit einer Temperiereinrichtung und einer Mahlzufuhreinrichtung.

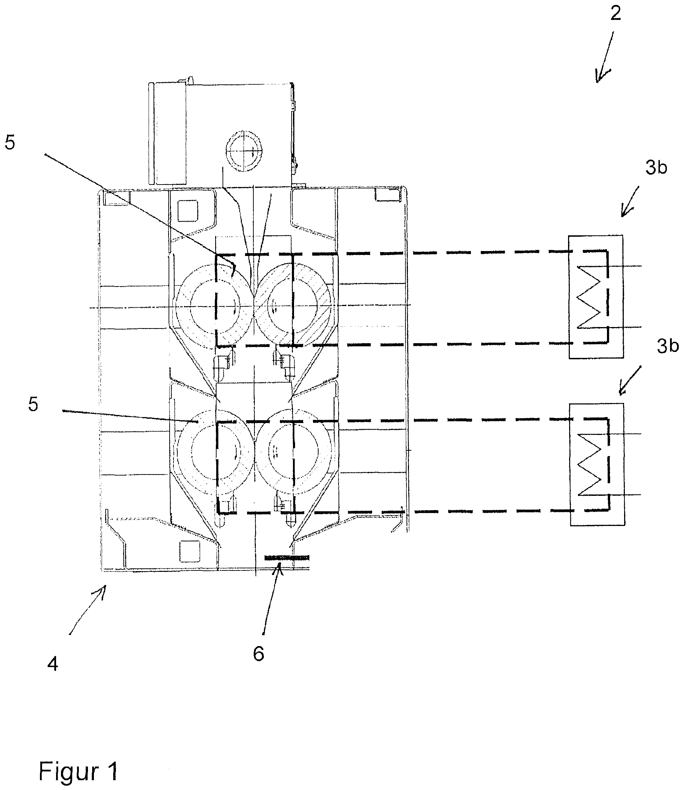

Figur 1 zeigt eine Schematische Darstellung einer erfindungsgemässen Vorrichtung 1 mit einer Thermoeinheit 2. In diesem Fall umfasst die Thermoeinheit 2 eine Temperiereinrichtung 3b für die Einheit zum Mahlen 4, hier Temperiereinrichtungen 3b für die Mahlwerkzeuge 5, die hier Walzenpaare sind.

Die Vorrichtung 1 umfasst einen Messeinrichtung 6 mit einem Temperatursensor, der die Temperatur des gemahlenen Kaffees erfasst.

Die gemessene Temperatur wird verwendet, um die Temperiereinrichtungen 3b nachzuregeln, so dass das Mahlgut auf einer bestimmten Zieltemperatur gehalten wird.

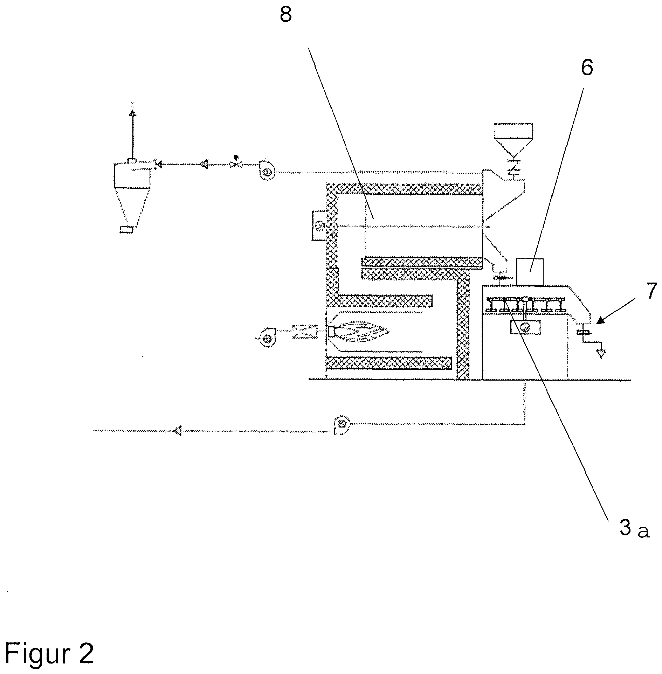

Figur 2 zeigt ein zweites Beispiel für eine erfindungsgemässe Vorrichtung mit einer Temperiereinrichtung 3a und einer Mahlzufuhreinrichtung 7.

Der Kaffee wird zunächst in einer Röstmaschine 8, hier einem Trommelröster, geröstet. Nach Abschluss der Röstung wird der Kaffe in eine Temperiereinrichtung 3a geleitet, in welcher der Kaffee von Luft durchströmt wird und dabei abkühlt. Die Temperiereinrichtung umfasst eine Messeinrichtung 6, mit welcher die Temperatur des Kaffees kontrolliert wird. Hat der Kaffee die für die Mahlung gewünschte Temperatur erreicht, so gelangt der Kaffee über die Mahlzufuhreinrichtung 7 in das in dieser Figur nicht gezeigte Mahlwerk.

Bei der Mahlzufuhreinrichtung 7 kann es sich um ein Schüttgutventil handeln, das in Abhängigkeit einer, bevorzugt zuvor festgelegten, Temperatur öffnet. Das Ventil kann auch ein Signal erhalten, sobald die Messeinrichtung 6 einen bestimmten Temperaturwert festgestellt hat.

## Patentansprüche

1. Vorrichtung zum Bearbeiten von gerösteten Kaffeebohnen,
**dadurch gekennzeichnet, dass**
die Vorrichtung eine Thermoeinheit (2) umfasst, die sicherstellt, dass die Temperatur der gerösteten Kaffeebohnen während des Mahlvorgangs und zumindest bei Beginn des Mahlvorgangs, zwischen 30°C und 150°C, insbesondere zwischen 35°C und 100°C, bevorzugt zwischen 40°C und 90°C, weiter bevorzugt zwischen 40°C und 60°C, beträgt,
wobei die Vorrichtung ein modulares Walzwerk umfasst, das wahlweise mit einer oder mehreren Walzenpassagen ausgestattet werden kann,
und die Thermoeinheit eine Temperiereinrichtung (3b) für die Einheit zum Mahlen umfasst, die so ausgelegt ist, dass die Temperatur des Mahlguts zwischen 30°C und 150°C, insbesondere zwischen 35°C und 100°C, bevorzugt zwischen 40°C und 90 °C, besonders bevorzugt zwischen 40°C und 60°C, haltbar ist,
wobei es sich bei der Temperiereinrichtung für die Einheit zum Mahlen um eine Temperiereinrichtung für Mahlwerkzeuge handelt, wobei die Temperiereinrichtung die Mahlwerkzeuge während des Mahlvorgangs in mindestens einer Mahlstufe auf einer Temperatur oder einem Temperaturbereich zwischen 30°C und 150°C, insbesondere zwischen 35°C und 120°C, weiter insbesondere zwischen 40°C und 110°C, bevorzugt zwischen 40°C und 90°C, besonders bevorzugt zwischen 40°C und 60°C oder zwischen 60°C und 80°C, hält, wobei
die Mahlwerkzeuge mit Kanälen durchsetzt sind, durch welche eine Temperierflüssigkeit in die Mahlwerkzeuge einbringbar ist, wobei die Temperatur der Temperierflüssigkeit derart steuer- und/oder regelbar ist, dass die Werkzeuge auf die gewünschte Zieltemperatur, bzw. den gewünschten Zieltemperaturbereich gebracht werden, wobei
eine Temperiereinheit für die Regelung der Temperatur von in Kanäle der Mahlwerkzeuge eingebrachter Temperierflüssigkeit bevorzugt einen Temperatursensor umfasst, der in einer Walze angeordnet ist,
**dadurch gekennzeichnet, dass**
die Thermoeinheit eine Temperiereinrichtung (3a) und
eine Mahlzufuhreinrichtung (7) umfasst, die so ausgelegt sind,
dass die gerösteten Kaffeebohnen für den Beginn des Mahlvorgangs auf Temperaturen des Mahlguts von 30°C und 150°C temperierbar und bei diesen Temperaturen mahlbar sind.

2. Vorrichtung nach Anspruch 1, **dadurch gekennzeichnet, dass** die Temperiereinrichtung ein Eingabemittel zum Eingeben der Zieltemperatur oder des Zieltemperaturbereichs des Mahlguts umfasst oder die Thermoeinheit mit einem Prozessorsystem verbunden ist, über welches die Temperatur oder der Temperaturbereich direkt oder in Abhängigkeit anderen Parameter an die Thermoeinheit eingegeben wird..

3. Vorrichtung nach einem der vorhergehenden Ansprüche **dadurch gekennzeichnet, dass** die Vorrichtung eine Messeinrichtung (6) zum Messen der Temperatur des gerösteten Kaffees vor, während und/oder nach dem Mahlen umfasst.

4. Vorrichtung nach einem der vorhergehenden Ansprüche **dadurch gekennzeichnet, dass** Vorrichtung eine Regeleinrichtung zum Temperieren der Einheit zum Mahlen der Bohnen, insbesondere zum Temperieren der Mahlwerkzeuge mindestens einer Mahlstufe, in Abhängigkeit von der Temperatur des Mahlguts umfasst.

5. Vorrichtung nach einem der vorhergehenden Ansprüche **dadurch gekennzeichnet, dass** die Vorrichtung ein Eingabe- und Vergleichmittel aufweist, mit welchen die Temperatur des Mahlguts in Abhängigkeit von der gewünschten Teilchengrössenverteilung des ausgehenden Mahlguts bestimmt wird.

6. Verfahren zum Verarbeiten von Kaffeebohnen in einem Walzwerk zum Mahlen der Bohnen, wobei das Mahlgut vor dem Mahlvorgang derart temperiert wird, dass die Temperatur des Mahlguts zumindest bei Beginn des Mahlvorgangs zwischen 30°C und 150°C, liegt, wobei das Walzwerk derart temperiert wird, dass die Temperatur des Mahlguts zwischen 30°C und 150°C liegt.

7. Verfahren gemäss Anspruch 6, wobei das Walzwerk, insbesondere eine oder mehrere Walzen, derart temperiert wird, dass die Temperatur des Mahlguts zwischen 30°C und 150°C, insbesondere zwischen 35°C und 100°C, weiter insbesondere zwischen 40°C und 60°C liegt,
insbesondere die Mahlwerkzeuge mindestens einer Mahlstufe auf Temperaturen zwischen 30°C und 150°C, insbesondere zwischen 35°C und 120°C, weiter insbesondere zwischen 40°C und 110°C, bevorzugt zwischen 40°C und 90°C, besonders bevorzugt zwischen 60°C und 80°C temperiert werden.

8. Verfahren gemäss Anspruch 6 oder 7, wobei die Temperatur des gerösteten Kaffees vor, während und/oder nach dem Mahlen gemessen wird.

9. Verfahren zum Verarbeiten von Kaffeebohnen, umfassend die folgenden Verfahrensschritte:
(i) Rösten der Kaffeebohnen;
(ii) Abkühlen der Kaffeebohnen auf Temperaturen von grösser als 66°C;
(iii) Mahlen der Kaffeebohnen bei Temperaturen zwischen 66°C und 150°C in einem Walzwerk mit einer oder mehreren Passagen.

10. Verfahren gemäss Anspruch 9, umfassend die Schritte
- Temperaturmessung der Kaffeebohnen während der Abkühlung;
- falls die Temperatur grösser als eine festgesetzte Zieltemperatur ist, weiter mit Abkühlen, sonst Überführen der Kaffeebohnen in eine Mahleinheit;
- Mahlen der Kaffeebohnen, wobei die Zieltemperatur einen Wert zwischen 30°C und 150°C, insbesondere zwischen 35°C und 100°C, bevorzugt zwischen 40°C und 90°C, besonders bevorzugt zwischen 40°C und 60°C besitzt.

## Claims

1. Device for processing roasted coffee beans, **characterized in that**
the device comprises a thermal unit (2) that ensures that the temperature of the roasted coffee beans during the grinding process and at least at the start of the grinding process is between 30°C and 150°C, in particular between 35°C and 100°C, preferably between 40°C and 90°C, more preferably between 40°C and 60°C,
the device comprising a modular roller mill that can be optionally equipped with one or more roller passages,
and the thermal unit comprises a tempering device (3b) for the grinding unit, which is designed so that the temperature of the grinding material can be maintained between 30°C and 150°C, in particular between 35°C and 100°C, preferably between 40°C and 90°C, particularly preferably between 40°C and 60°C,
wherein the tempering device for the milling unit is a tempering device for milling tools, wherein the tempering device maintains the milling tools during the milling process in at least one milling stage at a temperature or a temperature range between 30°C and 150°C, in particular between 35°C and 120°C, more particularly between 40°C and 110°C, preferably between 40°C and 90°C, particularly preferably between 40°C and 60°C or between 60°C and 80°C,
the milling tools are permeated with channels through which a tempering liquid can be introduced into the milling tools, the temperature of the tempering liquid being controllable and/or adjustable in such a way that the tools are brought to the desired target temperature or the desired target temperature range,
a tempering unit for controlling the temperature of tempering liquid introduced into channels of the milling tools preferably comprises a temperature sensor arranged in a roller,
**characterized in that**
the thermal unit comprises a tempering device (3a) and a grinding feed device (7) which are designed so that the roasted coffee beans can be tempered for the start of the grinding process to temperatures of the grinding material of 30°C and 150°C and can be ground at these temperatures.

2. The device according to claim 1, **characterized in that** the tempering device comprises an input means for entering the target temperature or the target temperature range of the grinding material or the thermal unit is connected to a processor system via which the temperature or temperature range is entered directly or in dependence on other parameters to the thermal unit.

3. The device according to one of the preceding claims, **characterized in that** it comprises a measuring device (6) for measuring the temperature of the roasted coffee before, during and/or after grinding.

4. The device according to one of the preceding claims, **characterized in that** the device comprises a control device for tempering the unit for grinding the beans, in particular for tempering the milling tools of at least one milling stage, as a function of the temperature of the grinding material.

5. The device according to one of the preceding claims, **characterized in that** the device has an input and comparison means with which the temperature of the grinding material is determined as a function of the desired particle size distribution of the outgoing grinding material.

6. A method for processing coffee beans in a roller mill for grinding the beans, wherein the temperature of the grinding material is controlled prior to the grinding operation such that the temperature of the grinding material is between 30°C and 150°C, at least at the start of the grinding operation, wherein the roller mill is temperature-controlled such that the temperature of the grinding material is between 30°C and 150°C.

7. The method according to claim 6, wherein the roller mill, in particular one or more rollers, is tempered in such a way that the temperature of the grinding material is between 30°C and 150°C, in particular between 35°C and 100°C, more particularly between 40°C and 60°C,
in particular the milling tools of at least one milling stage are tempered to temperatures between 30°C and 150°C, in particular between 35°C and 120°C, more particularly between 40°C and 110°C, preferably between 40°C and 90°C, particularly preferably between 60°C and 80°C.

8. The method according to claim 6 or 7, wherein the temperature of the roasted coffee is measured before, during and/or after grinding.

9. A method for processing coffee beans comprising the steps of:
(i) roasting the coffee beans;
(ii) cooling the coffee beans to temperatures of greater than 66°C;
(iii) grinding the coffee beans at temperatures between 66°C and 150°C in a single- or multi-pass roller mill.

10. The method according to claim 9, comprising the steps of
- measuring the temperature of the coffee beans during cooling;
- if the temperature is greater than a specified target temperature, continuing cooling, otherwise transferring the coffee beans to a grinding unit;
- grinding the coffee beans, the target temperature having a value between 30°C and 150°C, in particular between 35°C and 100°C, preferably between 40°C and 90°C, particularly preferably between 40°C and 60°C.

## Revendications

1. Dispositif pour le traitement de grains de café torréfiés,
**caractérisé en ce que**
le dispositif comprend une unité thermique (2) qui assure que la température des grains de café torréfiés pendant le processus de broyage et au moins au début du processus de broyage, est comprise entre 30°C et 150°C, en particulier entre 35°C et 100°C, de préférence entre 40°C et 90°C, plus préférablement entre 40°C et 60°C,
le dispositif comprenant un laminoir modulaire qui peut être équipé au choix d'un ou de plusieurs passages de cylindre,
et l'unité thermique comprend un dispositif de thermorégulation (3b) pour l'unité de broyage, qui est conçu de telle sorte que la température de la matière à broyer puisse être maintenue entre 30°C et 150°C, en particulier entre 35°C et 100°C, de préférence entre 40°C et 90°C, de manière particulièrement préférée entre 40°C et 60°C,
**en ce que** le dispositif de thermorégulation pour l'unité de broyage est un dispositif de thermorégulation pour des outils de broyage, dans lequel pendant le processus de broyage dans au moins une étape de broyage, le dispositif de thermorégulation maintien les outils de broyage à une température ou à une plage de températures entre 30°C et 150°C, en particulier entre 35°C et 120°C, plus particulièrement entre 40°C et 110°C, de préférence entre 40°C et 90°C, de manière particulièrement préférée entre 40°C et 60°C ou entre 60°C et 80°C, dans lequel
les outils de broyage sont traversés par des canaux à travers lesquels un liquide d'régulation de température peut être introduit dans les outils de broyage, la température du liquide de régulation de température pouvant être Contrôlée et/ou ajustée de telle sorte que les outils soient amenés à la température cible souhaitée ou à la plage de température cible souhaitée, où
une unité de thermorégulation de pour la régulation de la température du liquide de régulation de température introduit dans les canaux des outils de broyage comprend de préférence un capteur de température qui est disposé dans un cylindre,
**caractérisé en ce que**
l'unité thermique comprend un dispositif de thermorégulation (3a) et un dispositif d'alimentation de broyage (7) qui sont conçus de telle sorte que les grains de café torréfiés peuvent être thermorégulés à des températures de la matière à broyer de 30°C et 150°C pour le début du processus de broyage et peuvent être broyés à ces températures.

2. Dispositif selon la revendication 1, **caractérisé en ce que** le dispositif de thermorégulation comprend un moyen d'entrée pour entrer la température cible ou la plage de température cible de la matière à broyer, ou l'unité thermique est reliée à un système de processeur par lequel la température ou la plage de température est entrée dans l'unité thermique directement ou en fonction d'autres paramètres.

3. Dispositif selon l'une quelconque des revendications précédentes, **caractérisé en ce que** le dispositif comprend un moyen de mesure (6) pour mesurer la température du café torréfié avant, pendant et/ou après le broyage.

4. Dispositif selon l'une des revendications précédentes, **caractérisé en ce que** le dispositif comprend un dispositif de régulation pour thermoréguler l'unité de broyage des grains, en particulier pour thermoréguler les outils de broyage d'au moins une étape de broyage, en fonction de la température de la matière à broyer.

5. Dispositif selon l'une quelconque des revendications précédentes, **caractérisé en ce que** le dispositif comprend un moyen d'entrée et un moyen de comparaison permettant de déterminer la température de la matière à broyer en fonction de la distribution granulométrique souhaitée de la matière à broyer sortante.

6. Procédé de traitement de grains de café dans un laminoir pour broyer les grains, dans lequel la température de la matière à broyer est contrôlée avant le processus de broyage de telle sorte que la température de la matière à broyer se situe entre 30°C et 150°C, au moins au début du processus de broyage, le laminoir étant thermoréguler de telle sorte que la température de la matière à broyer se situe entre 30°C et 150°C.

7. Procédé selon la revendication 6, dans lequel le laminoir, en particulier un ou plusieurs cylindres, est thermoréguler de manière à ce que la température de la matière à broyer soit comprise entre 30°C et 150°C, en particulier entre 35°C et 100°C, plus particulièrement entre 40°C et 60°C en particulier les outils de broyage d'au moins une étape de broyage sont thermoréguler à des températures comprises entre 30°C et 150°C, en particulier entre 35°C et 120°C, plus particulièrement entre 40°C et 110°C, de préférence entre 40°C et 90°C, de manière particulièrement préférée entre 60°C et 80°C.

8. Procédé selon la revendication 6 ou 7, dans lequel la température du café torréfié est mesurée avant, pendant et/ou après le broyage.

9. Procédé de traitement de grains de café, comprenant les étapes suivantes :
(i) torréfaction des grains de café ;
(ii) refroidissement des grains de café à des températures supérieures à 66°C ;
(iii) broyage des grains de café à des températures comprises entre 66°C et 150°C dans un laminoir comportant un ou plusieurs passages.

10. Procédé selon la revendication 9, comprenant les étapes de
- Mesurer la température des grains de café pendant le refroidissement ;
- si la température est supérieure à une température cible fixée, continuer à refroidir, sinon transférer les grains de café dans une unité de broyage ;
- broyer les grains de café, la température cible ayant une valeur comprise entre 30°C et 150°C, en particulier entre 35°C et 100°C, de préférence entre 40°C et 90°C, de manière particulièrement préférée entre 40°C et 60°C.
